## Europäisches Patentamt

(19) **European Patent Office**

**Office européen des brevets**

(11) Veröffentlichungsnummer: **0 037 083**
**B1**

(12) # EUROPÄISCHE PATENTSCHRIFT

(45) Veröffentlichungstag der Patentschrift:
**01.02.84**

(51) Int. Cl.³: **H 02 G 1/12,** H 01 H 3/16

(21) Anmeldenummer: **81102282.1**

(22) Anmeldetag: **26.03.81**

(54) **Kontaktfahnenanordnung für eine Abisoliervorrichtung.**

(30) Priorität: **02.04.80 DE 3012768**

(43) Veröffentlichungstag der Anmeldung:
**07.10.81 Patentblatt 81/40**

(45) Bekanntmachung des Hinweises auf die Patenterteilung:
**01.02.84 Patentblatt 84/5**

(84) Benannte Vertragsstaaten:
**FR GB NL**

(56) Entgegenhaltungen:
**DE - A - 2 656 938**

(73) Patentinhaber: **Grote & Hartmann GmbH & Co. KG, Am Kraftwerk 13, D-5600 Wuppertal 21 (DE)**

(72) Erfinder: **Reinertz, Rudolf, Rolingswerth 14, D-5600 Wuppertal 2 (DE)**
Erfinder: **Caumanns, Fritz, Lessingstrasse 23, D-5608 Radevormwald (DE)**

(74) Vertreter: **Patentanwälte Dr. Solf & Zapf, Schlossbleiche 20 Postfach 13 02 19, D-5600 Wuppertal 1 (DE)**

## Kontaktfahnenanordnung für eine Abisoliervorrichtung

Die Erfindung betrifft eine Kontaktfahnenanordnung für eine Vorrichtung zum Abisolieren des Endbereichs eines isolierten Drahtes als Zusatzanordnung für Anschlagmaschinen gemäß dem ersten Teil des Anspruchs 1.

Gegenstand des deutschen Patents 2 452 101 ist eine Vorrichtung zum Abisolieren des Endbereichs eines isolierten Drahtes als Zusatzanordnung für Anschlagmaschinen, in die der Draht horizontal einführbar ist, im wesentlichen bestehend aus einem Gehäuse und einer Schneidvorrichtung für die Isolation mit zwei sich gegenüberstehenden Isoliertrennmessern mit V-förmigen Schneiden, von denen das eine ortsfest und das andere rechtwinklig zur Drahtachse in einer sich horizontal erstreckenden Ebene bis zu einer vorgebbaren Schließstellung verschiebbar angeordnet ist, und einer bewegbar ausgebildeten Klemmvorrichtung mit zwei Klemmbacken, von denen eine rechtwinklig zur Drahtachse in der Ebene verschiebbar ist und die Abisolierbewegung durch Relativbewegung von Klemm- und Schneidvorrichtung bei geschlossenen Werkzeugen erfolgt. Diese Vorrichtung zeichnet sich dadurch aus, daß beide an einem Bauteil befestigte Klemmbacken relativ zum Draht und zueinander gegenläufig in der Ebene und gemeinsam vertikal zu der Ebene auf- und abwärts bewegbar sind und die Schneidvorrichtung parallel zur Drahtachse in der Ebene bis zu einem Endpunkt jeweils hin- und herbewegbar ist und auf der der Schneidvorrichtung gegenüberliegenden Seite der Klemmbacken mit axialem Abstand zu diesen in der Ebene eine Drahtauflage vorgesehen ist, die je eine horizontal und vertikal zur Ebene sich erstreckende Anschlagkante für den isolierten Draht aufweist, von denen die sich vertikal erstreckende auf der dem ortsfesten Isoliermesser gegenüberliegenden Seite des Drahtes vorgesehen ist und die Drahtauflage bei Abwärtsbewegung der Klemmbacken mit diesen in einer zur Drahtachse senkrechten und zur Ebene schräg verlaufenden Richtung abwärts bewegbar ist, und daß das Bauteil in einer Nut vertikal verschiebbar ist, die von einer äußeren Gehäusewand begrenzt ist, hinter die im Endpunkt der Abisolierbewegung eine Rastklinke greift, die erst bei der durch die Anschlagmaschine bewirkbaren Aufwärtsbewegung des Bauteils an diesem entriegelbar ist.

Ferner ist wesentlich, daß die Rastklinke einen seitlichen Entriegelungsbolzen trägt, der mit einer schwenkbeweglich gelagerten Mitnehmerklinke zusammenwirkt und die Mitnehmerklinke auf einem Klinkenhalter sitzt, der über einen Tragbolzen mit dem auf- und abbeweglich geführten Bauteil verbunden ist.

Bei dieser bekannten Abisoliervorrichtung wird ein abzuisolierendes Drahtende über die Drahtauflage in die Vorrichtung eingeführt und durch eine langlochartige Ausnehmung hindurchgeschoben. Dabei trifft das Drahtende mit seinem freien Ende auf einem um eine Achse schwenkbeweglich gelagerten Winkelhebel, dessen Abstand zu dem Messer verstellbar ist. Der Winkelhebel wird von einer in einer Führung frei hin- und herbeweglich gelagerten Stange beaufschlagt, die ihrerseits beaufschlagt wird von einer an einem Endschalter angeordneten Biegefeder, wobei zwischen Stangenende und Biegefeder ein Überbrückungsglied angeordnet ist. Das Auftreffen des Drahtendes auf den Winkelhebel läßt diesen um seine Achse ausschwenken, wodurch die Stange bewegt wird und damit die elektrischen Kontakte des Endschalters gegen die Kraft der Biegefeder geschlossen werden. Hierdurch werden Zylinder aktiviert, deren Kolben ausfahren, wodurch die Klemmbacken und das gleitbare Messer bewegt werden, so daß die Isolation durchtrennt wird. Mit zeitlicher Verzögerung wird auch der für die Isolationsabstreifung vorgesehene Zylinder aktiviert, dessen Kolben ein Druckstück beaufschlagt. Das Druckstück überträgt die Bewegung auf einen Block, der den Messerzylinder, einen Führungsschlitten und die Messer trägt. Auf diese Weise führen die Messer eine horizontale Rückwärts- und Vorwärtsbewegung in Drahtrichtung aus.

Diese Kontaktfahnenanordnung arbeitet einwandfrei, sofern derart steife Leiter verwendet werden, die in der Lage sind, die Federkraft der Biegefeder zu überwinden, ohne dabei selbst zu verbiegen. Wenn sich jedoch ein Leiter beim Auftreffen auf die Kontaktfahne verbiegt, kann das zu einem unerwünschten schiefen Schnitt an der Isolationskante führen. Dies wiederum bedingt, daß die Isolationskralle eines Verbinders nicht bündig mit der Schneidkante abschließt, wodurch die Crimpfestigkeit beeinträchtigt wird. Für flexible Einzelleiter, beispielsweise Lahnlitzenleiter, ist die bekannte Kontaktfahnenanordnung nicht verwendbar, weil derartige Leiter die Kraft der Biegefeder nicht überwinden können. Man kann zwar Federn mit geringerer Federkraft wählen, erreicht aber dabei eine Grenze, weil geringe Federkräfte durch Erschütterungen, die üblicherweise am Arbeitsplatz auftreten können, überwunden werden, so daß unkontrollierte Schaltimpulse entstehen, was hohe Ausschußquoten und eine Verringerung der Arbeitsleistung zur Folge haben kann.

Aufgabe der Erfindung ist, eine Kontaktfahnenanordnung zu schaffen, die unabhängig vom Leiterquerschnitt und unabhängig von der Flexibilität bekannter Leiter arbeitet und insbesondere für Lahnlitzenleiter verwendbar ist.

Diese Aufgabe wird durch die Merkmale des Anspruchs 1 gelöst.

Nach dem Stand der Technik ist bekannt, hinter den Klemmbacken einer Abisoliervorrichtung vor den Abisoliermessern einen Führungstrichter vorzusehen, durch den der Leiter

2

eingefädelt werden muß. Hinter den Messern ist außerdem eine Membrane angeordnet, die mit einem bestimmten Luftdruck beaufschlagt wird. Der flexible Leiter muß durch den Trichter gesteckt und derart gegen die Membrane gestoßen werden, daß eine Luftdruckerhöhung erzeugt wird. Die Erhöhung löst dann den Schaltimpuls aus. Nachteilig ist neben dem erheblichen apparativen Aufwand, daß der Membranendruck auf die jeweilige Flexibilität des Leiters eingestellt werden muß, wozu sogar ein Umbau erforderlich werden kann. Zudem neigen auch derartige Anordnungen dazu, durch Erschütterungen Schaltimpulse auszulösen. Außerdem kann die Membranoberfläche verschmutzen, so daß die Anordnung nicht mehr einwandfrei arbeitet. Ferner ist das Einfädeln in den Trichter zeitaufwendig und mindert die Arbeitsgeschwindigkeit der Abisoliervorrichtung. Hinzu kommt, daß die Trichter ausgewechselt werden müssen, wenn Leiter mit anderen Querschnitten abisoliert werden sollen, weil die jeweilige Trichteröffnung auf die Querschnittsfläche des abzuisolierenden Drahtes abgestimmt ist.

Dagegen ist die erfindungsgemäße Kontaktfahnenanordnung für jeden bekannten Leiterquerschnitt flexibler Leitungen geeignet, arbeitet mit einfachen mechanischen Mitteln und ist sehr leichtgängig. Ein einfaches Einlegen des Leiters ermöglicht darüber hinaus eine hohe Arbeitsgeschwindigkeit.

Anhand der Zeichnung wird die Erfindung beispielshaft näher erläutert. Es zeigt

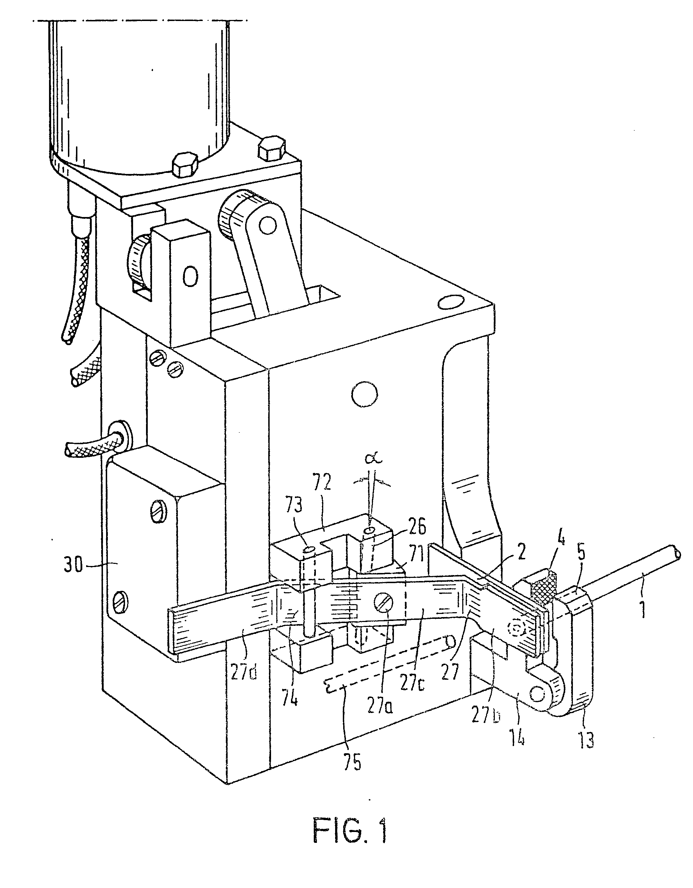

Fig. 1 eine perspektivische Ansicht der Anordnung von der Rückseite,

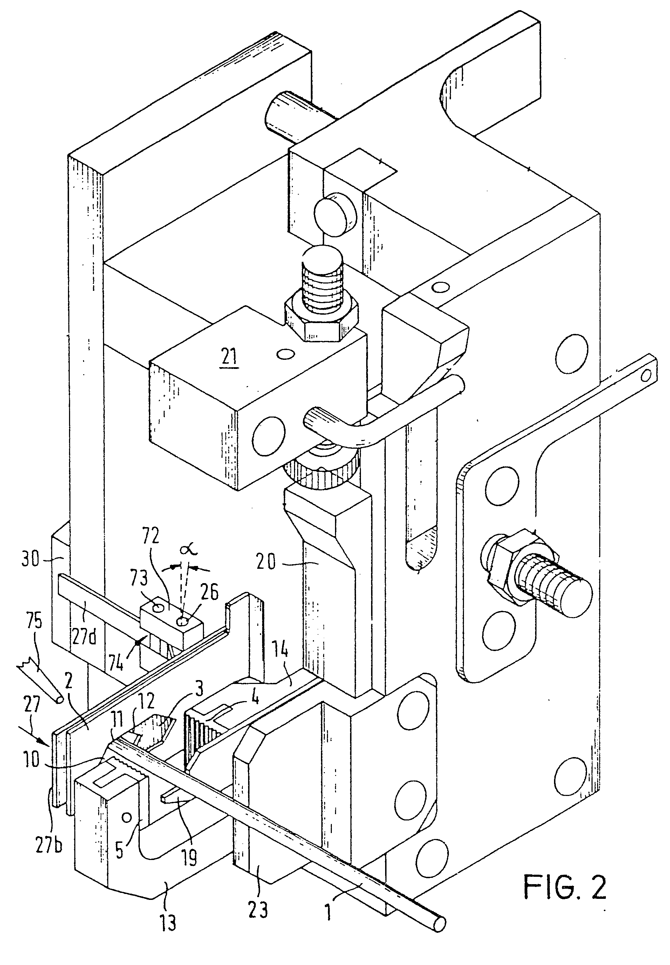

Fig. 2 eine perspektivische Ansicht der Anordnung von der Vorderseite.

Zum Abisolieren des Endteils eines isolierten Drahtes 1 besitzt die Vorrichtung zwei Messer 2, 3, zwei den Draht 1 während des Abisoliervorganges haltende Klemmbacken 4, 5 und eine Einrichtung zum Abstreifen der abgetrennten Isolation. Das Messer 3 ist an einem Führungsschlitten angeschlossen, der in einer Nut eines Blockes horizontal hin und her, und zwar rechtwinklig zur Drahtachse, bewegbar gelagert ist. Gegen das rückwärtige Ende des Führungsschlittens wirkt ein Kolben eines Pneumatikoder Hydraulikzylinders, um das Messer 3 in Richtung auf das Messer 2 zu führen. Das starr angeordnete Messer 2 weist eine langlochartige Ausnehmung 10 auf, deren auf der Zeichnung linker Rand als V-förmige Schneide 11 ausgebildet ist. Das Messer 3 besitzt an seinem freien vorderen Ende eine entsprechende V-förmig ausgebildete Schneide 12. Bei der Schließbewegung des Messers 3 bilden die Schneiden 11, 12 eine quadratische Schneidöffnung, die sich proportional zur Schließbewegung verkleinert. Ein im einzelnen nicht dargestellter verstellbarer Anschlag begrenzt den Bewegungshub des Messers 3. Die Rückführung des Messers 3 in die Ausgangsstellung besorgt eine nicht dargestellte Druckfeder.

Die Klemmvorrichtung besteht aus den Klemmbacken 4, 5 und den gegenläufig horizontal rechtwinklig zur Drahtachse hin- und herbeweglich gelagerten Schlitten 13, 14, die mittels einer Kulissenführung gegenläufig, d. h. aufeinanderzu, bewegbar sind, wobei die auf Festklemmen des Drahtes 1 gerichtete Bewegung der Klemmbacken 4, 5 über einen Kolben eines Druckzylinders und die rückläufige Bewegung über Federn erfolgt. Die Klemmbacken 4, 5 weisen eine aufgerauhte oder geriffelte Oberfläche auf. Eine Drahtauflage 19, die vor den Klemmbacken 4, 5 angeordnet ist, ermöglicht die zentrische Einlegung eines abzuisolierenden Drahtes 1 in Achsrichtung des Drahtes. Sie verhindert damit ein schiefes Einlegen, was eine schiefe Schnittkante der Isolation des Leiters und damit auch eine ungenaue Schnittkantenlage im Arbeitsraum bedingen würde. Die Drahtauflage 19 gibt die Drahtführöffnung völlig frei, wenn das Bauteil 20 von dem an einer Anschlagmaschine anzuordnenden Druckkörper 21 vertikal beaufschlagt wird. Dann nämlich gleitet das Bauteil 20 gegen die Kraft einer Feder senkrecht nach unten und gleichzeitig auch die an diesem Bauteil angeordnete Klemmvorrichtung mit den Klemmbacken 4, 5 und Führungsschlitten 13, 14 sowie der zugehörigen Kolbenzylinderanordnung, so daß die Klemmvorrichtung eine vertikale Ab- und Aufwärtsbewegung rechtwinklig zur Drahtachse ausführt.

Die Drahtauflage 19 gleitet bei der Abwärtsbewegung aus dem Drahteinführungsbereich mit einer schräg abwärts gerichteten Bewegung rechtwinklig zur Drahtachse heraus, weil sie Führungszapfen besitzt, die im Gehäuseteil 23 zwei entsprechend der gewünschten Bewegungsrichtung angeordnete Führungsnuten vorfindet.

Wird ein abzuisolierendes Drahtende über die Drahtauflage 19 in die Vorrichtung eingeführt und durch die langlochartige Ausnehmung 10 hindurchgeschoben, so trifft es mit seinem freien Ende auf einen um die Schwenkachse 26 schwenkbeweglich gelagerten Winkelhebel 27, dessen Abstand zu den Messern mit der Schraube 27a verstellbar ist.

Der Winkelhebel 27 besteht aus einem parallel zu den Messern 2, 3 angeordneten Arm 27b, einem davon nach rückwärts abgewinkelt verlaufenden Lagerarm 27c und einem davon ebenfalls abgewinkelt sich anschließenden Schaltarm 27d, wobei der Schaltarm 27d im Abstand vor einem Näherungsschalter 30 angeordnet ist und zum Arm 27b vorzugsweise rechtwinklig steht. Der Arm 27c ist an einem Schwenkkörper 71 befestigt, der in einer nutartigen Ausnehmung 74 eines Lagerblocks 72 sitzt, wobei die Schwenkachse 26 im Lagerblock 72 steckt und durch den Schwenkkörper 71 geht, derart, daß der Winkelhebel frei schwenkbar gelagert ist. Die Schwenkbegrenzung des Winkelhebels 27 wird durch den im Lagerblock 72 senkrecht sitzenden Stift 73 bewirkt, hinter dem der Arm 27c in der Ausnehmung 74 angeordnet ist.

Wesentlich ist, daß der Winkelhebel 27 frei drehbar auf der Schwenkachse 26 lagert und diese Achse in Richtung auf die Messer 2, 3 um einen Winkel $\alpha$ räumlich zur Vertikalen geneigt angeordnet ist, wobei der vor der Schwenkachse 26 liegende Teil des Lagerarms 27c und des Arms 27b gegenüber den rückwärtigen Teilen des Lagerarms 27c, 20 und des Schaltarms 27d des Winkelhebels 27 leicht übergewichtig sein kann. Durch die Schräglage der Schwenkachse 26 und ggf. aufgrund der Gewichtsverteilung wird der Winkelhebel 27 immer selbsttätig in Richtung auf die Messer 2, 3 bis zu einem einstellbaren Anschlag geschwenkt. Da als Schalter ein Näherungsschalter 30 verwendet wird, der berührungslos arbeitet, braucht der Schaltarm 27d zum Auslösen des Schaltimpulses lediglich einen bestimmten Weg ohne Hindernis zurückzulegen. Wenn somit ein flexibler Draht 1 gegen den Arm 27b gesteckt wird, ist lediglich die äußerst geringe, durch die Schrägstellung der Schwenkachse 26 bewirkte Gegengewichtskraft zu überwinden, um den Winkelhebel 27 zu verschwenken und den Schaltimpuls auszulösen.

Da der Schaltimpuls vor einem Anschlagen des Winkelhebels, also während des Schwenkens, erzeugt wird, kann auch kein Stauchen des Leiters vor dem Durchtrennen der Isolation erfolgen. Die Schwenkachse 26 geht vorzugsweise durch den Schwerpunkt des Winkelhebels, so daß das selbsttätige Verschwenken lediglich durch die Schräglage der Achse bewirkt wird, was außerordentlich geringe Rückdrängkräfte erfordert.

Nach einer besonderen Ausführungsform der Erfindung ist zur Ausschaltung jeglicher Störungen durch Erschütterungen vorgesehen, einen Luftstrahl gegen den Arm 27b von der rückwärtigen Seite zu richten, so daß der Winkelhebel 27 immer in der Ausgangsstellung ruht, bevor ein neuer Draht 1 eingeführt wird. Beim Einführen des Drahtes 1 wird der Luftstrahl abgeschaltet oder abgelenkt, so daß der Draht 1 lediglich den unbeaufschlagten Winkelhebel verschwenken muß. Nach dem Erzeugen des Schaltpulses und dem Abisolieren wird der Luftstrahl wieder auf dem Arm 27b gerichtet, so daß der beim Entnehmen des abisolierten Leiters aus der Vorrichtung der selbsttätig zurückschwenkende Winkelhebel nicht durch Erschütterungen oder dergleichen Einflüsse geschwenkt werden kann. Für die Beaufschlagung des Winkelhebels 27 mit einem Luftstrahl ist zweckmäßigerweise hinter dem Arm 27b eine Luftleitung mit einer auf den Arm 27b gerichteten Düse 75 angeordnet. Diese Düse 75 ist vorzugsweise verschwenkbar gelagert, so daß ein Abschalten des Luftstroms nicht erforderlich ist, sondern das Verschwenken der Düse ausreicht, den Luftstrahl vom Arm 27b abzulenken. Zur Ablenkung kann jedoch auch vorgesehen sein, eine Ablenkeinrichtung zwischen Düse 75 und Arm 27b schwenkbar anzuordnen, die es ermöglicht, den Luftstrahl vom Arm 27b abzulenken.

Zweckmäßigerweise ist die Berührungsfläche des Arms 27b, auf die der Draht 1 beim Einstecken stößt, aufgerauht ausgeführt, so daß der Draht nicht abgleiten kann.

## Patentansprüche

1. Kontaktfahnenanordnung für eine Vorrichtung zum Abisolieren des Endbereichs eines isolierten Drahtes (1) als Zusatzanordnung für Anschlagmaschinen, bei der ein abzuisolierendes Drahtende über eine Drahtauflage (19) in die Vorrichtung eingeführt und durch eine langlochartige Ausnehmung (10) hindurchgeschoben wird, wobei das Drahtende mit seinem freien Ende auf einen um eine Schwenkachse (26) schwenkbeweglich gelagerten Winkelhebel (27) trifft, dadurch gekennzeichnet, daß die Schwenkachse (26) des Winkelhebels in Richtung auf die langlochartige Ausnehmung (10) räumlich zur Vertikalen geneigt angeordnet ist.

2. Kontaktfahnenanordnung nach Anspruch 1, dadurch gekennzeichnet, daß der Winkelhebel (27) aus einem parallel zu der langlochartigen Ausnehmung (10) angeordneten Arm (27b), einem davon nach rückwärts abgewinkelt verlaufenden Lagerarm (27c) und einem davon ebenfalls abgewinkelt sich anschließenden Schaltarm (27d) besteht, wobei der Schaltarm (27d) im Abstand vor einem Näherungsschalter (30) angeordnet ist.

3. Kontaktfahnenanordnung nach Anspruch 1 oder 2, dadurch gekennzeichnet, daß der Schaltarm (27d) zum Arm (27b) vorzugsweise rechtwinklig steht.

4. Kontaktfahnenanordnung nach einem der Ansprüche 1 bis 3, dadurch gekennzeichnet, daß der Lagerarm (27c) an einem Schwenkkörper (71) befestigt ist, der in einer nutartigen Ausnehmung (74) eines Lagerblocks (72) sitzt, wobei die Schwenkachse (26) im Lagerblock (72) steckt und durch den Schwenkkörper (71) geht, derart, daß der Winkelhebel (27) frei schwenkbar gelagert ist.

5. Kontaktfahnenanordnung nach einem der Ansprüche 1 bis 4, dadurch gekennzeichnet, daß die Schwenkbegrenzung des Winkelhebels (27) durch einen im Lagerblock (72) senkrecht sitzenden Stift (73) bewirkt wird, hinter dem der Lagerarm (27c) in der Ausnehmung (74) angeordnet ist.

6. Kontaktfahnenanordnung nach einem der Ansprüche 1 bis 5, dadurch gekennzeichnet, daß der vor der Schwenkachse (26) liegende Teil (27c und 27b) des Winkelhebels (27) gegenüber den rückwärtigen Teilen (27c und 27d) des Winkelhebels (27) leicht übergewichtig ist.

7. Kontaktfahnenanordnung nach einem der Ansprüche 1 bis 5, dadurch gekennzeichnet, daß die Schwenkachse (26) durch den Schwerpunkt des Winkelhebels (27) geht.

8. Kontaktfahnenanordnung nach einem der Ansprüche 1 bis 7, dadurch gekennzeichnet, daß ein Luftstrahl gegen den Arm (27b) von der rückwärtigen Seite wirkt.

9. Kontaktfahnenanordnung nach Anspruch 8, dadurch gekennzeichnet, daß für die Beaufschlagung des Winkelhebels (27) mit einem Luftstrahl hinter dem Arm (27b) eine Luftleitung mit einer auf den Arm (27b) gerichteten Düse (75) angeordnet ist.

10. Kontaktfahnenanordnung nach Anspruch 9, dadurch gekennzeichnet, daß die Düse (75) verschwenkbar angeordnet ist.

11. Kontaktfahnenanordnung nach einem der Ansprüche 1 bis 10, dadurch gekennzeichnet, daß eine Ablenkeinrichtung zwischen Düse (75) und Arm (27b) schwenkbar angeordnet ist.

12. Kontaktfahnenanordnung nach einem der Ansprüche 1 bis 11, dadurch gekennzeichnet, daß die Berührungsfläche des Arms (27b) aufgerauht ausgeführt ist.

## Claims

1. Contact tag arrangement for a device for stripping the insulation from the end region of an insulated wire (1) as accessory for fastening machines, in which a wire end to be stripped is introduced by way of a wire support (19) into the device and pushed through a recess (10) in the manner of an elongate hole, while the wire end by its free end impinges on an angle lever (27), which is borne to be pivotally movable around a pivot axle (26), characterised thereby, that the pivot axle (26) of the angle lever (27) ist sparially inclined to the vertical in direction of the recess (10) in the manner of an elongate hole.

2. Contact tag arrangement according to claim 1, characterised thereby, that the angle lever (27) consists of an arm (27b) arranged parallelly to the recess (10) in the manner of an elongate hole, a bearing arm (27c) extending bent away rearwardly therefrom and an adjoining switch arm (27d) likewise bent away therefrom, wherein the switch arm (27d) is arranged at a spacing in front of a proximity switch (30).

3. Contact tag arrangement according to claim 1 or 2, characterised thereby, that the switch arm (27d) stands preferably at right angles to the arm (27b).

4. Contact tag arrangement according to one of the claims 1 to 3, characterised thereby, that the bearing arm (27c) is fastened to a pivot body (71), which sits in a groove-like recess (74) of a bearing block (72), wherein the pivot axle (26) is pinned in the bearing block (72) and passes through the pivot body (71) in such a manner that the angle lever (27) is borne to be freely pivotable.

5. Contact tag arrangement according to one of the claims 1 to 4, characterised thereby, that the pivotal limitation of the angle lever (27) is effected by a pin (73), which is sitting vertically in the bearing block (72) and behind which the bearing arm (27c) is arranged in the recess (74).

6. Contact tag arrangement according to one of the claims 1 to 5, characterised thereby, that the part (27c and 27b) of the angle lever (27) lying in front of the pivot axle (26) is slightly overweight relative to the rearward parts (27c and 27d) of the angle lever (27).

7. Contact tag arrangement according to one of the claims 1 to 5, characterised, that the pivot axle (26) passes through the centre of gravity of the angle lever (27).

8. Contact tag arrangement according to one of the claims 1 to 7, characterised thereby, that an air jet acts from the rear side against the arm (27b).

9. Contact tag arrangement according to claim 8, characterised thereby, that an duct with a nozzle (75) directed onto the arm (27b) is arranged for the loading of the angle lever (27) by an air jet behind the arm (27b).

10. Contact tag arrangement according to claim 9, characterised thereby, that the nozzle (75) is arranged to be pivotable.

11. Contact tag arrangement according to one of the claims 1 to 10, characterised therby, that a deflecting equipment is pivotably arranged between nozzle (75) and arm (27b).

12. Contakt tag arrangement according to one of the claims 1 to 11, characterised thereby, that the contact area of the arm (27b) is executed to be roughened.

## Revendications

1. Montage à volets de contact pour un dispositif à dénuder l'extrémité d'un fil isolé (1), constituant un montage additionnel pour des machines de serrage, dans lequel l'extrémité du fil à dénuder est introduite par l'intermédiaire d'un support (19) et poussée dans un évidement (10) en forme de trou longitudinal, l'extrémité libre du fil venant buter sur un levier coudé (27) mobile autour d'un pivot (26), caractérisé en ce que le pivot (26) du levier (27) est incliné par rapport à la verticale dans le sens de l'évidement (10) longitudinal.

2. Montage à volets de contact selon la revendication 1, caractérisé en ce que le levier coudé (27) se compose d'un bras (27b) parallèle à l'évidement longitudinal (10), d'un bras support (27c), incurvé vers l'arrière et prolongeant le bras (27b), et d'un bras de contact (27d), également coudé et prolongeant le bras précédent, le bras de contact (27d) se situant devant un détecteur de proximité (30), à une certaine distance de ce dernier.

3. Montage à volets de contact selon une des revendications 1 et 2, caractérisé en ce que le bras de contact (27d) est de préférence perpendiculaire au bras (27b).

4. Montage à volets de contact selon une quelconque des revendications 1 à 3, caractérisé en ce que le bras support (27c) est fixé sur un corps pivotant (71), prévu dans un évidement (74) en forme de rainure d'un bloc porteur (72), le pivot (26) traversant le bloc porteur (72) et le corps pivotant (71), de manière à permettre au

levier coudé (27) de pivoter librement.

5. Montage à volets de contact selon une quelconque des revendications 1 à 4, caractérisé en ce que le mouvement du levier (27) est limité par une goupille (73) verticale, prévue dans le bloc porteur (72) et derrière laquelle le bras support (27c) passe dans l'évidement (74).

6. Montage à volets de contact selon une quelconque des revendications 1 à 5, caractérisé en ce que la partie (27c et 27b) du levier coudé (27), située avant le pivot (26), présente un léger excédent de poids par rapport à la partie arrière (27c et 27d) de ce même levier (27).

7. Montage à volets de contact selon une quelconque des revendications 1 à 5, caractérisé en ce que le pivot (26) passe par le centre de gravité du levier coudé (27).

8. Montage à volets de contact selon une quelconque des revendications 1 à 7, caractérisé en ce qu'un jet d'air est dirigé sur le bras (27b), à partir de sa face arrière.

9. Montage à volets de contact selon la revendication 8, caractérisé en ce que la sollicitation du levier coudé (27) par un jet d'air est assurée par une conduite, prévue derrière le bras (27b) et dotée d'une buse (75) orientée sur ce même bras (27b).

10. Montage à volets de contact selon la revendication 9, caractérisé en ce que la buse (75) peut pivoter.

11. Montage à volets de contact selon une quelconque des revendications 1 à 10, caractérisé par un dispositif de déviation pivotant, monté entre la buse (75) et le bras (27b).

12. Montage à volets de contact selon une quelconque des revendications 1 à 11, caractérisé par une rugosité de la surface de contact du bras (27b).

FIG. 1

FIG. 2